# EUROPEAN PATENT SPECIFICATION

(11) **EP 2 022 244 B1**
(45) Date of publication and mention of the grant of the patent: **18.05.2011**
(21) Application number: 06831772.6
(22) Date of filing: 15.12.2006
(51) Int. Cl.: H04M 1/60, G08C 17/02

(54) **ELECTRIC APPLIANCE**
ELEKTRISCHES GERÄT
APPAREIL ÉLECTRIQUE

(30) Priority: 30.05.2006 IT RN20060035
(43) Date of publication of application: 11.02.2009
(73) Proprietor: Indesit Company S.p.A., 60044 Fabriano (AN) (IT)
(72) Inventor: CHERRI, Marco, 60015 Falconara Marittima (IT); SPURI, Marco, 60044 Fabriano (IT); SANTONICOLA, Paolo, 60044 Fabriano (IT)
(74) Representative: Paolizzi, Marco
(86) International application number: PCT/IB2006/003708
(87) International publication number: WO 2007/138379

(56) References cited:
- WO-A-2005/020548
- US-A- 5 920 806
- US-A1- 2005 143 134
- US-A1- 2005 202 854

## Description

### Technical Field

The present invention relates to an electric appliance. For example this electric appliance may be used in private homes, in warehouses, shops, etc.

### Background Art

There are prior art electric appliances which receive commands from a user through suitable buttons or knobs and which have warning lights or displays for providing the user with information. However, to interact with the electric appliance the user must go to it.

Moreover, it should be noticed that while carrying out many of the operations usually performed in the home, situations may arise which constitute a disturbance, for example the arrival of a telephone call. Some such operations, for example home cleaning, must be interrupted in order to answer the telephone and have a telephone conversation. If, at the moment the telephone call arrives, a person's hands are wet or dirty, he must dry or clean them before taking the call: this is often the case, for example, when the call arrives while a person is prepaying and cooking meals and means ruining the risk of not being able to answer the call in time. Moreover, having a telephone conversation may distract the user: this may result is disadvantages such as burning meals which are cooking on a hob.

Finally, it must be emphasised that telephone conversations in the home, for example in a kitchen, usually have the disadvantage of not being easy to sustain, since there may be various sources of noise (electric appliances such as an extractor hood, dishwasher, television, etc.).

Document US2005/0143134 discloses a vehicle with a hands-free telephone system.

Document US5920806 discloses a telephone system which includes a base station, at least one mobile station and a special peripheral device which is adapted to cooperate with a TV set in a hands-free telephone mode.

Document WO2005/020548 discloses an accessory for use with a cellular telephones which includes a stand engageable with the telephone, a microphone, a speaker and a connecting means for connecting the microphone and speaker to circuitry of the telephone.

Document US2005/0202854 discloses a vehicle with a universal mobile phone adapter device..

### Disclosure of the Invention

The aim of the present invention is to overcome the above-mentioned disadvantages by providing an electric appliance which is able to interact with a user even only through audio-vocal means. The present invention also has for an aim to provide an electric appliance able to allow a user to interact in a bi-directional way with telephony devices and/or with other electronic devices even only through audio-vocal means. The present invention has for a further aim to produce an electric appliance which, if a telephone call arrives on a telephony device, does not cause the electric appliance user disadvantages such as having to interrupt the operation in progress or risk not answering the call in time. The present invention also has for an aim to ensure that the electric appliance is such that it increases the ease of having telephone conversations in the environment in which the electric appliance is located, by eliminating or limiting noise interference.

### Brief Description of the Drawings

The technical features of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the inventive concept, and in which:
Figure 1 is a perspective view of an electric appliance in accordance with the present invention;
Figure 2 is a block diagram of the operation of an electric appliance in accordance with the present invention.

### Detailed Description of the Preferred Embodiments of the Invention

It is important to point out that, in this description and in the claims herein, the expression "operatively connected" is frequently used: two devices are understood to be "operatively connected" to one another if it is possible to transfer any signal from one of the two devices to the other, using any means (electric connection, radio frequency, etc.) and directly or indirectly (that is to say, directly or using intermediate devices inserted between the two devices).

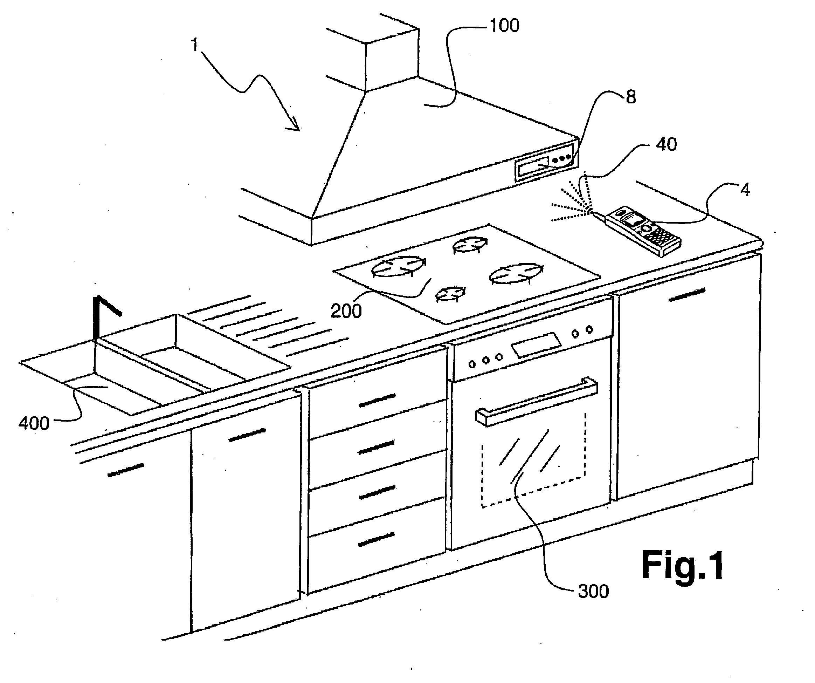

Figure 1 shows, installed in a home kitchen, an electric appliance 1 comprising, by way of example but without limiting the scope of the invention, a hood 100. It should be noticed that, the term "hood" refers to the electric apparatus which traditionally comprises the following operating units:
i) an extractor system, through which the hood 100 extracts fumes and vapours from a hob 200 below and which usually comprises a ventilating unit, for example a rotary turbomachine (made by combining an electric motor, a rotor and a worm screw) which causes the air to acquire kinetic energy through an aerodynamic action;
ii) a control system, which controls the functions of the electric appliance and which is operatively connected to the user interface 8;
iii) a filtering system, which allows purification of the air extracted by absorption of the particulate constituting the fats and odours and
iv) a casing, constituting the joining and physical protection component for the other operating units and giving the hood 100 its aesthetic appearance.

There is also often a lighting system for illuminating the hob 200 by supplying power to one or more lights.

It should be noticed that the inventive concepts inherent in this description and in the claims herein would remain unchanged if the electric appliance 1 were to comprise, in place of the hood 100, any other household electric apparatus (for example, a refrigerator or fridge-freezer, a freezer, dishwasher, washing machine, or a tumble drier, oven or hob, boiler, television or stereo, etc.). It should also be noticed that, in the example illustrated in Figure 1, the hood 100 may comprise all or only some of the operating units previously listed and it may comprise either an extractor hood (that is to say, a hood in which the air extracted is conveyed, by a suitable pipe, out of the room in which the hood is installed) or a filter hood (that is to say, a hood in which the air extracted, after being purified, is returned to the room in which the hood is installed).

As well as the electric appliance 1, Figure 1 shows the hob 200, which comprises a plurality of cooking points, the oven 300 and the sink 400, representing the electric apparatuses and devices normally found in a domestic environment such as a kitchen. Figure 1 also shows a telephony device 4, located close to the electric appliance 1, which may be a mobile telephone, or a cordless telephone, or any other device suitable for connecting to a telephone network. The telephony device 4 is illustrated with electromagnetic waves visible (obviously, these are not visible in real life) associated with the arrival of a telephone call 40.

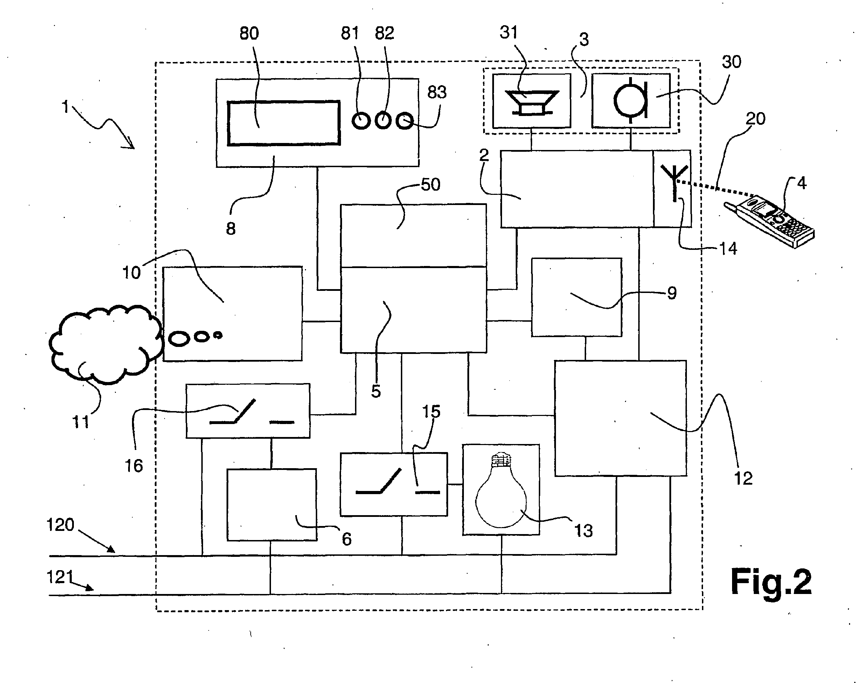

Figure 2 is a block diagram of electric appliance 1 operation, showing several of the devices which the electric appliance 1 may comprise and several of the operative connections between the devices illustrated. In particular, the numeral 120 denotes the electric appliance power line, whilst the numeral 121 denotes the earth lead.

The electric appliance 1 comprises a hands-free device 3 for bi-directional audio-vocal interaction between the electric appliance 1 and a user. The hands-free device 3 comprises a microphone 30 and a loudspeaker 31, as is explained in more detail below. This hands-free device 3 may be used to issue commands to the electric appliance 1 and/or to receive information from the electric appliance 1.

The hands-free device 3 is preferably operatively connected to bi-directional means 2 for transmitting and receiving a signal 20. The bi-directional transmitting and receiving means 2 in turn can be operatively connected to a telephony device 4 and/or to a separate electronic device. This allows transmission of the signal 20 between the hands-free device 3 and the telephony device 4 and/or the separate electronic device.

For the bi-directional means 2 for transmitting and receiving the signal 20 to be able to be operatively connected to the telephony device 4 and/or the separate electronic devices, it is assumed that the telephony device 4 and/or the separate electronic devices comprise predetermined transceiver means, compatible with the bi-directional transmitting and receiving means 2, which make them suitable for receiving or transmitting the signal 20 and consequently for interacting with the bi-directional transmitting and receiving means 2.

In a first embodiment of the electric appliance disclosed, the bi-directional transmitting and receiving means 2 can be operatively connected to the telephony device 4 and/or the separate electronic device by wireless connection. The bi-directional transmitting and receiving means 2 can preferably be operatively connected to the telephony device 4 and/or separate electronic device with a radio frequency connection. In particular, the bi-directional transmitting and receiving means 2 may be of the Bluetooth type (preferably in accordance with IEEE 802.15.1 or later standards), or WiFi (preferably in accordance with IEEE 802.11b or later standards), or ZigBee (preferably in accordance with IEEE 802.15.4 or later standards). In said first embodiment, bi-directional transmitting and receiving means 2 comprise an aerial 14, with which they can transmit or receive the signal 20.

In a second embodiment of the electric appliance disclosed, the bi-directional transmitting and receiving means 2 can be connected to the telephony device 4 and/or the separate electronic device through electric connections (for example, electric connectors or dedicated electric wiring), with which adapter means may be associated, designed to give the external telephony and/or electronic devices of a different type connectivity to the bi-directional transmitting and receiving means 2. In this second embodiment, the electric appliance 1 may comprise electric charging means, commonly called a battery charger, suitably for connection to the battery of the telephony device 4 and/or separate electronic device through the above-mentioned electric connections: this gives the advantage of being able to charge the battery of the telephony device 4 and/or the separate electronic device by electrically connecting it to the bi-directional transmitting and receiving means 2.

By way of example, but without limiting the scope of the invention, the accompanying drawings show the electric appliance 1 as conforming to the above-mentioned first embodiment of the invention. In particular, the bi-directional transmitting and receiving means 2 illustrated in Figure 2 are of the radio-frequency type and can be operatively connected to the telephony device 4, which comprises a radio-frequency node (for example the Bluetooth node in many mobile telephones currently on sale, for connecting the mobile telephones to accessories such as ear pieces). This choice, indicated by way of example only, in no way limits the general character of the present invention, since the features of the electric appliance 1 described below may apply to electric appliances complying with both of the afore-said embodiments. In the same way, the advantages of the present invention are achieved irrespective of the way in which the operative connection is obtained between the bi-directional transmitting and receiving means 2 and the telephony device 4.

If the electric appliance 1 is of the electronically controlled type, that is to say it comprises an electronic control system 5 for controlling the electric appliance 1 electric loads, the bi-directional transmitting and receiving means 2 are operatively connected to the electronic control system 5, for example through a suitable electric connection. The electronic control system 5 may comprise a microcontroller. A memory 50 may advantageously be associated with it, the memory having at least one non-volatile portion (of the EPROM, EEPROM, Flash, etc. type) for saving data or information relative to operation of the bi-directional transmitting and receiving means 2 and other electric appliance 1 electric loads. The electronic control system 5 is powered by a feeder 12, which transforms mains alternating voltage into low direct voltage. The feeder 12 also advantageously powers the bi-directional transmitting and receiving means 2.

Advantageously, the electric appliance 1 comprises an electric load. If the electric appliance 1 is electronically controlled, the electric load is controlled by the electronic control system 5, for example by means of a power actuator 16 (triac, relay, etc.). The power actuator 16, controlled by the electronic control system 5, regulates the electric power input to the electric load from the mains.

Advantageously, the electric load comprises an electric motor 6 controlled by the electronic control system 5 based on information supplied to the electronic control system 5 by the bi-directional transmitting and receiving means 2.

If the electric appliance 1 comprises the hood 100, the electric motor 6 is part of the hood 100 extractor system and is connected to the air extractor rotor, which increases the head of the air flow created. When used to generate an air flow by means of a rotor, as in the hood 100, the electric motor 6 is an indirect source of noise: the action of the rotor, driven by the electric motor 6, produces aerodynamic noise, both due to the thrust that the rotor blades transmit to the air, and due to the eddies which form on the rotor blades. This aerodynamic noise, generated irrespective of the type of electric motor 6 and rotor (axial, centrifugal, mixed flow, etc.), is greater the higher the head and air flow created, which depend on the rotor speed of rotation, and therefore the electric motor 6 speed of rotation.

If the electric motor 6 is of the variable speed type, the command issued by the electronic control system 5, based on information supplied by the bi-directional transmitting and receiving means 2, may consist of an adjustment of the electric motor 6 speed of rotation. The electric motor 6 is appropriately of the variable speed type if the electric appliance 1 comprises the hood 100. In this case, by varying the electric motor 6 speed of rotation, it is possible to vary the flow rate of air extracted by the hood 100 and consequently the noise generated by the electric appliance 1. If sensors suitable for detecting the amount of fumes and/or vapours and/or gas in the space adjacent to the electric appliance 1 are associated with the hood 100, the variability of the electric motor 6 speed of rotation allows the electronic control system 5 to automatically regulate the above-mentioned speed, so that the optimum air flow is extracted relative to the amount of fumes and/or vapours and/or gas detected.

In the electric appliance 1, comprising the electronic control system 5 and the electric motor 6, controlled by the electronic control system 5 based on the information supplied by the bi-directional transmitting and receiving means 2, the electric motor 6 adopts, in a first configuration, a predetermined speed and, in a second configuration, a speed which is lower than said predetermined speed. The electric motor 6 adopts the second configuration when the bi-directional transmitting and receiving means 2 transmit or receive the telephone conversation in progress signal 20, in particular for a telephone conversation in progress using the telephony device 4. The electric motor 6 predetermined speed is usually set by the user or automatically established by the electronic control system 5 depending on the amount of fumes and/or vapours and/or gas detected by the appropriate sensors.

In this way, during a telephone conversation, the noise interference generated by the electric appliance 1 is eliminated or reduced, making the telephone conversation easier. Indeed, when the electric motor 6 adopts the second configuration, the electric appliance 1 user has no difficulty clearly distinguishing the words of the person they are speaking to, nor does he need to raise his voice to be heard over the noise of the electric appliance 1. In the second configuration, if it is not possible to achieve an electric motor 6 speed which makes the telephone conversation intelligible, a zero speed can be achieved by switching off the electric motor 6.

When the bi-directional transmitting and receiving means 2 inform the electronic control system 5 that the telephone conversation carried out using the telephony device 4 has ended, the electronic control system 5 instructs the electric motor 6 to return to the first configuration. In this way, the electric motor 6 returns to the speed of rotation that was reached before the telephone conversation started.

If the electric appliance 1 is a television, the electric load consists of the television itself. In this case, while the bi-directional transmitting and receiving means 2 receive or transmit the telephone conversation in progress signal 20, the sound is turned down so as to avoid disturbing the telephone conversation.

If the electric appliance 1 is a hob, the electric load consists of the active cooking points. In this case, while the bi-directional transmitting and receiving means 2 receive or transmit the telephone conversation in progress signal 20, the power of the active cooking points is reduced to a minimum to avoid burning meals being cooked on said cooking points.

The hands-free device 3 is designed to be used for telephone conversations carried out using the telephony device 4 and comprises the microphone 30 and the loudspeaker 31. The bi-directional transmitting and receiving means 2 are operatively connected to both the microphone 30 and the loudspeaker 31. On one side, by means of the microphone 30, they acquire the voice of the electric appliance 1 user and transmit it to the telephony device 4, whilst on the other side, through the loudspeaker 31, they broadcast the sounds reaching the telephony device 4 into the room in which the electric appliance 1 is located.

The electric appliance 1 may comprise audio reproduction means, operatively connected to the loudspeaker 31. In this case, there is the advantage of also being able to use the electric appliance 1 to listen to music, since the loudspeaker 31 can be used to broadcast music into the room in which the electric appliance 1 is located. In particular, the music reproduced by the audio reproduction means may be in the form of digital files (for example in mp3 format), saved in the electric appliance 1 memory 50, or saved in the memory of the telephony device 4 or a separate electronic device and transferred, by means of the signal 20, to the electric appliance 1 bi-directional transmitting and receiving means 2.

The electric appliance 1 comprises indicators, suitable for indicating the arrival of the telephone call 40 at the telephony device 4. Such indicators alert the user to the arrival of the telephone call 40, so that he can perform the operations required to answer the call 40 and begin the telephone conversation using the telephony device 4. The indicators may be indicator lights, for example a warning light (lamp, or LED, etc.), which can light up when the telephone call 40 arrives, or acoustic indicators, for example an acoustic alarm able to emit a sound when the telephone call 40 arrives. The indicators are operatively connected to the bi-directional transmitting and receiving means 2 and are controlled by the electronic control system 5.

The loudspeaker 31 of the hands-free device 3 may be used as an acoustic indicator, making it generate a sound signal dedicated to alerting the electric appliance 1 user to the arrival of the telephone call 40 at the telephony device 4.

If the electric appliance 1 comprises a lighting device 13, the lighting device 13 may be used as an indicator, making it generate a predetermined light signal, for example, flashing, when the telephone call 40 arrives. The flashing is generated by the electronic control system 5, when the bi-directional transmitting and receiving means 2 inform it that the telephone call 40 has arrived at the telephony device 4. For example, said flashing is obtained by acting on the power actuator 15 (triac, relay, etc.), which regulates the electric power input to the lighting device 13 from the mains. This method of indicating the arrival of the telephone call 40 is particularly recommended if the electric appliance 1 comprises the hood 100. In this case, the lighting device 13 may be one of the lights in the hood 100 lighting system, designed to light the hob 200.

The electric appliance 1 comprises a user interface 8, operatively connected to the electronic control system 5 and usually comprising selection devices (for example buttons 81, 82 and 83, or knobs, or touch control devices, etc.), suitable for allowing the user to select at least one program or at least one parameter relative to the electric appliance 1, and display devices (for example the screen 80, or a set of LEDs, etc.), suitable for clearly indicating to the user at least one piece of information or at least one parameter relative to the electric appliance 1. The screen 80 may be a seven-segment display, or a liquid crystal display, or a graphic display which uses OLED technology, etc: The user interface 8 is operatively connected to the bi-directional transmitting and receiving means 2. Advantageously, it replicates on the electric appliance 1 the user interface of the telephony device 4.

The above-mentioned replica may be total or partial, depending on whether or not there is a corresponding device on the electric appliance 1 user interface 8 for each user interface device on the telephony device 4.

The user interface 8 may comprise user interface devices specifically suitable for allowing the electric appliance 1 user to interact with the telephony device 4. An example of such devices may be a specific numeric keypad which allows the user to dial the telephone numbers to be called using the telephony device 4. The user interface 8 may comprise interface devices which allow the user to interact with both the electric appliance 1 and with the telephony device 4. An example of such devices could be the screen 80, if it is suitable for clearly indicating to the user both information relative to the electric appliance 1 operating status and information from the telephony device 4 (for example, but without limiting the scope of the invention, the screen 80 may display the telephone number of the person who made the call 40, or text messages arriving at the telephony device 4).

When the bi-directional transmitting and receiving means 2 are switched on, they are in the state in which they can transmit and receive the signal 20 and therefore they can interact with the telephony device 4 and/or the separate electronic device. When the bi-directional transmitting and receiving means are switched off, they are in the state in which they cannot transmit and receive the signal 20 and therefore they cannot interact with the telephony device 4 and/or the separate electronic device.

The user interface 8 may comprise a suitable switching device for switching the bi-directional transmitting and receiving means 2 on and off. In the example illustrated in Figure 2, it may be assumed that the switching device is the button 83 and that the user can switch the bi-directional transmitting and receiving means 2 on and off by pressing the button 83.

The electric appliance 1 may comprise a proximity sensor suitable for detecting the presence of a predetermined telephony device 4 and/or an electronic device in an area extending up to a predetermined distance from the electric appliance 1.

In this case, the bi-directional transmitting and receiving means 2 may be switched on automatically, as soon as the proximity sensor has detected the presence of the telephony device 4 and/or the electronic device. Similarly, the bi-directional transmitting and receiving means 2 may be switched off automatically, as soon as the above-mentioned sensor has detected that the telephony device 4 and/or the electronic device is no longer close to the electric appliance 1.

The electric appliance disclosed comprises an environmental detection sensor 9 operatively connected to the bi-directional transmitting and receiving means 2. The environmental detection sensor 9 is suitable for detecting emergency conditions and the bi-directional transmitting and receiving means 2 are suitable for sending the telephony device 4 the command to send an alarm call to at least one predetermined user.

If the electric appliance is operatively connected to a separate electronic device the bi-directional transmitting and receiving means 2 are also suitable for sending an alarm communication to said separate electronic device.

The environmental detection sensor 9, which is connected to the electronic control system 5, performs a safety function since it is able to identify the existence of an emergency condition or an incipient emergency. The alarm call, which may also be an alarm text message, or the alarm communication inform at least one predetermined user of the emergency condition or incipient emergency.

The type of environmental detection sensor 9 is not important for the purposes of the invention. If the electric appliance 1 comprises the hood 100, the environmental detection sensor 9 may be a gas sensor, suitable for detecting any gas leaks from the hob 200 and the bi-directional transmitting and receiving means 2 may for example send the telephony device 4 the command to send an alarm call when the concentration of gas in the air measured by the gas sensor is higher than a limit value. The environmental detection sensor 9 could be a flood sensor, if the electric appliance 1 were to comprise a washing apparatus such as a washing machine or dishwasher, a door open sensor, if the electric appliance 1 were to comprise a refrigeration apparatus such as a refrigerator or freezer, a smoke sensor, if the electric appliance 1 were to comprise a cooking apparatus such as an oven.

The electric appliance 1 disclosed may advantageously comprise voice control means which interpret precoded signals. The voice control means are operatively connected to the electronic control system 5 and are associated with a microphone. The microphone 30 may be used as the microphone associated with the voice control means, so that it is shared by the hands-free device 3 and the voice control means.

The precoded signals are instructions issued by the user to the voice control means, in the form of predetermined key words, and which the voice control means interpret in a unique way, so that the corresponding control action can then be carried out on the electric appliance 1. For example, once the "LIGHT" instruction has been received and that instruction has been interpreted, the voice control means send the electronic control system 5 an indication of consent to switch on the lighting device 13.

The voice control means are operatively connected to the bi-directional transmitting and receiving means 2. The user can answer the telephone call 40, arriving at the telephony device 4, using a precoded signal which is interpreted by the voice control means, in particular by saying a key word (for example "HELLO") dedicated to answering telephone calls arriving at the telephony device operatively connected to the bi-directional transmitting and receiving means 2. Once that precoded signal has been interpreted, the voice control means send the bi-directional transmitting and receiving means 2 an indication of consent to answer the telephone call 40.

The voice control means can also be used by the electric appliance 1 user to switch the bi-directional transmitting and receiving means 2 on and off and/or to authorise the telephony device 4 to make a call to a predetermined person. The electric appliance 1 memory 50 may store, preferably in table form, relationships which associate identification key words with telephone numbers. In such a case, the user can make a call with the telephony device 4 using the voice control means. If the user says one of the identification key words, the voice control means send the bi-directional transmitting and receiving means 2 an indication of consent to make a call to the corresponding telephone number. For example, after the user has said the key word "PAUL" and once that word has been interpreted and associated with Paul's telephone number, the voice control means send the electronic control system 5 a specific indication of consent to authorise the telephony device 4 to make a call to Paul's telephone number.

Advantageously, the voice control means send the bi-directional transmitting and receiving means 2 the user commands to allow the control of any electronic devices operatively connected to the bi-directional means 2.

This description clearly shows the advantages guaranteed for the electric appliance 1 user by the fact that he can use the bi-directional transmitting and receiving means 2 together with the voice control means. He does not have to interrupt the operation he is performing in order to interact with the telephony device 4 and/or with the separate electronic device.

The signal 20 can be used to transmit information from the bi-directional transmitting and receiving means 2 to the telephony device 4. In particular, such information is generated by the electronic control system 5 and relates to the electric appliance 1. It may be operating information, that is to say indicating the electric appliance 1 operating status, or statistical information, summarising electric appliance 1 use by the user, or diagnostic information, representative of any electric appliance 1 operating faults. Through the signal 20, the bi-directional transmitting and receiving means 2 can transmit to the telephony device 4, together with the information, an indication of consent to make a call to transfer this information to at least one predetermined user (for example, the bi-directional transmitting and receiving means 2 may transmit to the telephony device 4, the indication of consent to transfer the diagnostic information to a preventive maintenance centre, via a telephone network).

The electric appliance 1 comprises a communication node 10, which connects the electric appliance 1 to a network 11 of electric user devices. Through the communication node 10, the electric appliance 1 can exchange information with other electric user devices (for example with other electric appliances such as the hob 200 or the oven 300, or with a personal computer, or with a control and monitoring device such as that described in patent EP 1095440, etc.).

The inventive concepts inherent in the present invention are irrespective of the type of network 11 (radio frequency, electric network-based, infrared, optical fibre-based, telephone pair-based, etc.) and the communication technique used for the exchange of information between the electric user devices. By way of example, without limiting the scope of the invention, it may be assumed that the network 11 is the electric appliance 1 power supply network and that the communication node 10 is suitable for exchanging information with the communication nodes of the hob 200 and the oven 300 using the communication technique described in patent application WO 02/21664.

The communication node 10 guarantees many advantages, since it, together with the bi-directional transmitting and receiving means 2, allows the exchange of information between the telephony device 4 and each of the electric user devices connected to the network 11. In particular, the bi-directional transmitting and receiving means 2 can send the telephony device 4 the command to send an alarm call to at least one predetermined user, based on an emergency condition or incipient emergency detected by an environmental detection sensor outside the electric appliance 1. Moreover, the bi-directional transmitting and receiving means 2 can transmit to the telephony device 4, through the signal 20, operating, statistical or diagnostic information relative to any electric user device connected to the network 11.

The electric user devices connected to the network 11 may be controlled by the respective electronic control systems on the basis of information transmitted by the telephony device 4 through the signal 20. For example, when the telephone call 40 arrives at the telephony device 4, the hob 200 electronic control system may reduce to a minimum the power of the active cooking points, thus solving the problem of burning any meals being cooked on the hob 200 while the subsequent telephone conversation takes place. Again when the telephone call 40 arrives, the noise generated by any electric user device which may interfere with the call, for example a television, can automatically be eliminated or reduced.

As already indicated, the electric appliance 1 bi-directional transmitting and receiving means 2 disclosed can be operatively connected not just to the telephony device 4, but also to different types of electronic devices, for example a remote monitoring device, a file reproduction device, a handheld computer.

The electric appliance 1 can be used with applications commonly known as "Walkie Talkies", which can be used for example to remotely monitor a baby sleeping. The sounds reaching the remote monitoring device are transmitted by that device to the bi-directional transmitting and receiving means 2 and are then broadcast, through the loudspeaker 31, in the room in which the electric appliance 1 is located. The electric appliance 1 can also be used with file reproduction devices, such as the portable reproducer described in patent application US 2003/0095096. The audio files saved in the file reproducer devices are transmitted to the bi-directional transmitting and receiving means 2 and reproduced by the electric appliance 1 audio reproduction means. Finally, the electric appliance 1 can be used with handheld computers, with which the electronic control system 5 can exchange information, through the bi-directional transmitting and receiving means 2. In all of these cases, electric appliance 1 interaction with a predetermined electronic device can be switched on vocally by the user with the hands-free device 3.

The invention brings many advantages.

A first advantage is linked to the fact that an electric appliance comprising a hands-free device for bi-directional interaction with the electric appliance is provided.

Another important advantage is that the electric appliance is in turn capable of bi-directional interaction with a telephony device and/or with a separate electronic device.

The invention described is suitable for obvious industrial applications and can be modified and adapted in several ways without thereby departing from the scope of the inventive concept. Moreover, all technical details of the invention may be substituted by technically equivalent elements. ,

## Claims

1. Household electric appliance which comprises:
- a hands-free device (3) for bi-directional audio-vocal interaction between the household electric appliance (1) and a user, the hands-free device (3) comprising a microphone (30) and a loudspeaker (31) and being operatively connected to bi-directional means (2) for transmitting and receiving a signal (20), said bi-directional transmitting and receiving means (2) in turn being able to be operatively connected to a telephony device (4) and/or to a separate electronic device to allow transmission of the signal (20) between the hands-free device (3) and the telephony device (4) and/or the separate electronic device;
- an electronic control system (5) operatively connected to the bi-directional transmitting and receiving means (2), said electronic control system (5) being powered by a feeder (12), which transforms mains alternating voltage into low direct voltage; and **characterised in that** it comprises:
- an extractor or a filtering hood;
- audio reproduction means, operatively connected to the loudspeaker (31) able to broadcast music, the music reproduced by the audio reproduction means being in the form of digital files, saved in an household electric appliance (1) memory (50) which is associated with the electronic control system and with at least one non-volatile portion or saveable in the memory of the telephony device (4) or the separate electronic device and transferrable, by means of the signal (20), to the household electric appliance (1) bi-directional transmitting and receiving means (2);
- an electric load controlled by the electronic control system (5) based on information supplied to the electronic control system (5) by the bi-directional transmitting and receiving means (2); the electric load comprising an electric motor (6) which, in a first configuration, adopts a predetermined speed and, in a second configuration, adopts a speed which is lower than said predetermined speed, the second configuration being adopted while the bi-directional transmitting and receiving means (2) are transmitting or receiving the telephone conversation in progress signal (20).

2. Household electric appliance according to claim 1, **characterised in that** it comprises sensors for detecting the amount of fumes and/or vapours and/or gas in the space adjacent to the electric appliance, said sensors being associated with the hood; the electric motor (6) predetermined speed is automatically established by the electronic control system (5) depending on the amount of fumes and/or vapours and/or gas detected by appropriate sensors so that the optimum air flow is extracted relative to the amount of fumes and/or vapours and/or gas detected.

3. Household electric appliance according to claim 1 or 2, **characterised in that** the bi-directional transmitting and receiving means (2) can be operatively connected to the telephony device (4) and/or the separate electronic device by wireless connection.

4. Household electric appliance according to any of the claims from 1 to 3, **characterised in that** the bi-directional transmitting and receiving means (2) can be operatively connected to the telephony device (4) and/or the separate electronic device by radio frequency connection.

5. Household electric appliance according to claim 1 or 2, **characterised in that** the bi-directional transmitting and receiving means (2) can be connected to the telephony device (4) and/or the separate electronic device by electric connections.

6. Household electric appliance according to claim 5, **characterised in that** it comprises electric charging means suitable for connection to the battery of the telephony device (4) and/or separate electronic device through the electric connections.

7. Household electric appliance according to any of the claims from 1 to 6, **characterised in that** it comprises indicators suitable for indicating the arrival of a telephone call (40) at the telephony device (4).

8. Household electric appliance according to any of the claims from 1 to 7, **characterised in that** it comprises a user interface (8) replicating on the household electric appliance (1) the user interface of the telephony device (4).

9. Household electric appliance according to any of the claims from 1 to 8, **characterised in that** it comprises an environmental detection sensor (9) connected to the bi-directional transmitting and receiving means (2), the environmental detection sensor, (9) detecting emergency conditions and the bi-directional transmitting and receiving means (2) being suitable for sending the telephony device (4) the command to send an alarm call to at least one predetermined user.

10. Household electric appliance according to any of the claims from 1 to 8, **characterised in that** it comprises an environmental detection sensor (9) connected to the bi-directional transmitting and receiving means (2), the environmental detection sensor (9) detecting emergency conditions and the bi-directional transmitting and receiving means (2) being suitable for sending said separate electronic device an alarm communication.

11. Household electric appliance according to any of the foregoing claims, **characterised in that** it comprises voice control means which interpret precoded signals.

12. Household electric appliance according to claim 11, **characterised in that** the voice control means are operatively connected to the bi-directional transmitting and receiving means (2), the voice control means sending the bi-directional transmitting and receiving means (2) an indication of consent to answer a telephone call (40) or a command to make a telephone call (40) to a predetermined person.

13. Household electric appliance according to any of the foregoing claims, **characterised in that** it comprises a communication node (10) which connects the household electric appliance (1) to a network (11) of electric user devices.

14. Household electric appliance according to any of the foregoing claims, **characterised in that** it comprises a proximity sensor suitable for detecting the presence of a predetermined telephony device (4) and/or an electronic device in an area extending up to a predetermined distance from the electric appliance (1).

## Patentansprüche

1. Elektrisches Haushaltsgerät, das umfasst:
- eine Freihandvorrichtung (3) für die bidirektionale audiovokale Interaktion zwischen dem elektrischen Haushaltsgerät (1) und einem Benutzer, wobei die Freihandvorrichtung (3) ein Mikrofon (30) und einen Lautsprecher (31) umfasst und betriebsbereit an bidirektionale Mittel (2) zum Senden und Empfangen eines Signals (20) angeschlossen ist, die genannten bidirektionalen Sende- und Empfangsmittel (2) dagegen in der Lage sind, betriebsbereit an eine Telefonvorrichtung (4) und/oder an eine separate elektronische Vorrichtung angeschlossen zu werden, um die Übertragung des Signals (20) zwischen der Freihandvorrichtung (3) und der Telefonvorrichtung (4) und/oder der separaten elektronischen Vorrichtung zu ermöglichen;
- ein elektronisches Steuerungssystem (5), das betriebsbereit an die bidirektionalen Sende- und Empfangsmittel (2) angeschlossen ist, wobei das genannte elektronische Steuerungssystem (5) über eine Einspeisung (12) gespeist wird, die die Anschlusswechselspannung in Niedergleichspannung umwandelt; und **dadurch gekennzeichnet, dass** es umfasst:
- eine Absaugung oder eine Filterhaube;
- Audiowiedergabemittel, betriebsbereit angeschlossen an den Lautsprecher (31), in der Lage, Musik auszusenden, wobei die von den Audiowiedergabemitteln wiedergegebene Musik in Form von Digitaldateien in einem Speicher (50) eines elektrischen Haushaltsgeräts (1) gespeichert ist, der mit dem elektronischen Steuerungssystem und mit mindestens einem nichtflüchtigen Abschnitt verbunden ist oder im Speicher der Telefonvorrichtung (4) oder der separaten elektronischen Vorrichtung gespeichert werden kann und durch das Signal (20) an die bidirektionalen Sende- und Empfangsmittel (2) des elektrischen Haushaltsgeräts (1) übertragen werden kann;
- eine elektrische Last, überwacht durch das elektronische Steuerungssystem (5), basiert auf Informationen, die dem elektronischen Steuerungssystem (5) durch die bidirektionalen Sende- und Empfangsmittel (2) geliefert werden; die elektrische Last umfasst einen Elektromotor (6), der in einer ersten Konfiguration eine vorgegebene Drehzahl einsetzt und in einer zweiten Konfiguration eine Drehzahl einsetzt, die geringer als die genannte vorgegebene Drehzahl ist, wobei die zweite Konfiguration eingesetzt wird, wenn die bidirektionalen Sende- und Empfangsmittel (2) das Signal (20) senden oder empfangen, dass ein Telefongespräch in Gang ist.

2. Elektrisches Haushaltsgerät nach Anspruch 1, **dadurch gekennzeichnet, dass** es Sensoren zum Erfassen der Menge an Rauch und/oder Dampf und/oder Gas im an das elektrische Gerät angrenzenden Bereich umfasst, wobei die genannten Sensoren mit der Haube verbunden sind; die vorgegebene Drehzahl des Elektromotors (6) wird automatisch durch das elektronische Steuerungssystem (5) je nach der Menge an Rauch und/oder Dampf und/oder Gas festgelegt, die durch geeignete Sensoren erfasst wurde, sodass der optimale Luftstrom bezüglich der erfassten Menge an Rauch und/oder Dampf und/oder Gas abgesaugt wird.

3. Elektrisches Haushaltsgerät nach Anspruch 1 oder 2, **dadurch gekennzeichnet, dass** die bidirektionalen Sende- und Empfangsmittel (2) betriebsbereit an die Telefonvorrichtung (4) und/oder die separate elektronische Vorrichtung durch eine drahtlose Verbindung angeschlossen werden können.

4. Elektrisches Haushaltsgerät nach einem der Ansprüche 1 bis 3, **dadurch gekennzeichnet, dass** die bidirektionalen Sende- und Empfangsmittel (2) betriebsbereit an die Telefonvorrichtung (4) und/oder die separate elektronische Vorrichtung durch Funkfrequenzverbindung angeschlossen werden können.

5. Elektrisches Haushaltsgerät nach Anspruch 1 oder 2, **dadurch gekennzeichnet, dass** die bidirektionalen Sende- und Empfangsmittel (2) an die Telefonvorrichtung (4) und/oder die separate elektronische Vorrichtung durch elektrische Verbindungen angeschlossen werden können.

6. Elektrisches Haushaltsgerät nach Anspruch 5, **dadurch gekennzeichnet, dass** es elektrische Lademittel umfasst, die für den Anschluss an die Batterie der Telefonvorrichtung (4) und/oder der separaten elektronischen Vorrichtung durch elektrische Verbindungen geeignet sind.

7. Elektrisches Haushaltsgerät nach einem der Ansprüche 1 bis 6, **dadurch gekennzeichnet, dass** es Anzeigen umfasst, die geeignet sind, um das Eingehen eines Telefonanrufs (4) an der Telefonvorrichtung (4) anzuzeigen.

8. Elektrisches Haushaltsgerät nach einem der Ansprüche 1 bis 7, **dadurch gekennzeichnet, dass** es eine Benutzeroberfläche (8) umfasst, die die Benutzeroberfläche der Telefonvorrichtung (4) auf dem elektrischen Haushaltsgerät (1) wiedergibt.

9. Elektrisches Haushaltsgerät nach einem der Ansprüche 1 bis 8, **dadurch gekennzeichnet, dass** es einen Raumluftsensor (9) umfasst, der an die bidirektionalen Sende- und Empfangsmittel (2) angeschlossen ist, wobei der Raumluftsensor (9) Notsituationen erfasst und die bidirektionalen Sende- und Empfangsmittel (2) geeignet sind, um an die Telefonvorrichtung (4) den Befehl zum Senden eines Alarmrufs an mindestens einen vorgegebenen Benutzer zu senden.

10. Elektrisches Haushaltsgerät nach einem der Ansprüche 1 bis 8, **dadurch gekennzeichnet, dass** es einen Raumluftsensor (9) umfasst, der an die bidirektionalen Sende- und Empfangsmittel (2) angeschlossen ist, wobei der Raumluftsensor (9) Notsituationen erfasst und die bidirektionalen Sende- und Empfangsmittel (2) geeignet sind, um eine Alarmkommunikation an die genannte separate elektronische Vorrichtung zu senden.

11. Elektrisches Haushaltsgerät nach einem der vorhergehenden Ansprüche, **dadurch gekennzeichnet, dass** es Mittel zur Stimmkontrolle umfasst, die präcodierte Signale auswerten.

12. Elektrisches Haushaltsgerät nach Anspruch 11, **dadurch gekennzeichnet, dass** die Mittel zur Stimmkontrolle betriebsbereit an die bidirektionalen Sende- und Empfangsmittel (2) angeschlossen sind, wobei die Mittel zur Stimmkontrolle den bidirektionalen Sende- und Empfangsmitteln (2) eine Angabe der Zustimmung zur Beantwortung eines Telefonanrufs (40) oder einen Befehl zum Tätigen eines Telefonanrufs (40) an eine vorgegebene Person senden.

13. Elektrisches Haushaltsgerät nach einem der vorhergehenden Ansprüche, **dadurch gekennzeichnet, dass** es einen Kommunikationsknoten (10) umfasst, der das elektrische Haushaltsgerät (1) mit einem Netzwerk (11) elektrischer Verbrauchervorrichtungen verbindet.

14. Elektrisches Haushaltsgerät nach einem der vorhergehenden Ansprüche, **dadurch gekennzeichnet, dass** es einen Näherungssensor umfasst, der geeignet ist, um die Anwesenheit einer vorgegebenen Telefonvorrichtung (4) und/oder einer elektronischen Vorrichtung in einem Bereich zu erfassen, der sich bis zu einer vorgegebenen Entfernung vom elektrischen Gerät (1) erstreckt.

## Revendications

1. Électroménager électrique comprenant :
- un dispositif mains libres (3) pour interaction audio-vocale bidirectionnelle entre l'électroménager électrique (1) et un utilisateur, le dispositif mains libres (3) comprenant un microphone (30) et un haut-parleur (31) et étant opérationnellement connecté à des moyens bidirectionnels (2) pour émettre et pour recevoir un signal (20), lesdits moyens bidirectionnels d'émission et de réception (2), à leur tour, pouvant être opérationnellement connectés à un appareil téléphonique (4) et/ou à un appareil électronique séparé pour permettre la transmission du signal (20) entre le dispositif mains libres (3) et l'appareil téléphonique (4) et/ou l'appareil électronique séparé ;
- un système de commande électronique (5) opérationnellement connecté aux moyens bidirectionnels d'émission et de réception (2), ledit système de commande électronique (5) étant alimenté par une ligne d'alimentation (12), qui transforme la tension alternative du secteur en une basse tension continue ; et **caractérisé en ce qu'**il comprend :
- un extracteur ou une hotte filtrante ;
- des moyens de reproduction audio, opérationnellement connectés au haut-parleur (31) capable de transmettre de la musique, la musique reproduite par les moyens de reproduction audio étant sous la forme de fichiers numériques, enregistrés dans la mémoire (50) d'un électroménager électrique (1) qui est associée au système de commande électronique et avec au moins une partie non volatile, ou enregistrables dans la mémoire de l'appareil téléphonique (4) ou de l'appareil électronique séparé et transmissibles, via le signal (20), aux moyens bidirectionnels d'émission et de réception (2) de l'électroménager électrique (2) ;
- une charge électrique contrôlée par le système de commande électronique (5) en fonction de l'information fournie au système de commande électronique (5) par les moyens bidirectionnels d'émission et de transmission (2) ; la charge électrique comprenant un moteur électrique (6) qui, dans une première configuration, adopte une vitesse prédéterminée et, dans une deuxième configuration, adopte une vitesse inférieure à ladite vitesse prédéterminée, la deuxième configuration étant adoptée pendant que les moyens bidirectionnels d'émission et de réception (2) sont en train d'émettre ou de recevoir le signal (20) de la conversation téléphonique en cours.

2. Électroménager électrique selon la revendication 1, **caractérisé en ce qu'**il comprend des capteurs pour détecter la quantité de fumées et/ou vapeurs et/ou gaz dans l'espace près de l'électroménager électrique, lesdits capteurs étant associés à la hotte ; la vitesse prédéterminée du moteur électrique (6) est automatiquement établie par le système de commande électronique (5) en fonction de la quantité de fumées et/ou vapeurs et/ou gaz détectée par des capteurs prévus à cet effet, de sorte à extraire le débit d'air optimal en fonction de la quantité de fumées et/ou vapeurs et/ou gaz détectée.

3. Électroménager électrique selon les revendications 1 ou 2, **caractérisé en ce que** les moyens bidirectionnels d'émission et de réception (2) peuvent être opérationnellement connectés à l'appareil téléphonique (4) et/ou à l'appareil électronique séparé via une connexion sans fil.

4. Électroménager électrique selon l'une quelconque des revendications 1 à 3, **caractérisé en ce que** les moyens bidirectionnels d'émission et de réception (2) peuvent être opérationnellement connectés à l'appareil téléphonique (4) et/ou à l'appareil électronique séparé via une connexion radiofréquence.

5. Électroménager électrique selon les revendications 1 ou 2, **caractérisé en ce que** les moyens bidirectionnels d'émission et de réception (2) peuvent être connectés à l'appareil téléphonique (4) et/ou à l'appareil électronique séparé via des connexions électriques.

6. Électroménager électrique selon la revendication 5, **caractérisé en ce qu'**il comprend des moyens de chargement électrique pouvant être connectés à la batterie de l'appareil téléphonique (4) et/ou de l'appareil électronique séparé via les connexions électriques.

7. Électroménager électrique selon l'une quelconque des revendications 1 à 6, **caractérisé en ce qu'**il comprend des indicateurs en mesure de signaler l'arrivée d'un appel téléphonique (40) sur l'appareil téléphonique (4).

8. Électroménager électrique selon l'une quelconque des revendications 1 à 7, **caractérisé en ce qu'**il comprend une interface utilisateur (8) reproduisant sur l'électroménager électrique (1) l'interface utilisateur de l'appareil téléphonique (4).

9. Électroménager électrique selon l'une quelconque des revendications 1 à 8, **caractérisé en ce qu'**il comprend un capteur de détection environnemental (9) connecté aux moyens bidirectionnels d'émission et de réception (2), le capteur de détection environnemental (9) détectant des conditions d'urgence, et les moyens bidirectionnels d'émission et de réception (2) étant en mesure de transmettre à l'appareil téléphonique (4) la commande d'envoyer un appel d'alarme à au moins un utilisateur prédéterminé.

10. Électroménager électrique selon l'une quelconque des revendications 1 à 8, **caractérisé en ce qu'**il comprend un capteur de détection environnemental (9) connecté aux moyens bidirectionnels d'émission et de réception (2), le capteur de détection environnemental (9) détectant des conditions d'urgence, et les moyens bidirectionnels d'émission et de réception (2) étant en mesure de transmettre audit appareil électronique séparé une communication d'alarme.

11. Électroménager électrique selon l'une quelconque des revendications précédentes, **caractérisé en ce qu'**il comprend des moyens de commandes vocales qui interprètent des signaux pré-codés.

12. Électroménager électrique selon la revendication 11, **caractérisé en ce que** les moyens de commandes vocales sont opérationnellement connectés aux moyens bidirectionnels d'émission et de réception (2), les moyens de commandes vocales transmettant aux moyens bidirectionnels d'émission et de réception (2) une indication d'autorisation pour répondre à un appel téléphonique (40) ou une commande pour faire un appel téléphonique (40) à une personne prédéterminée.

13. Électroménager électrique selon l'une quelconque des revendications précédentes, **caractérisé en ce qu'**il comprend un noeud de communication (10) qui connecte l'électroménager électrique (1) à un réseau (11) d'appareils utilisateurs électriques.

14. Électroménager électrique selon l'une quelconque des revendications précédentes, **caractérisé en ce qu'**il comprend un capteur de proximité pouvant détecter la présence d'un appareil téléphonique prédéterminé (4) et/ou d'un appareil électronique dans une zone couvrant une distance prédéterminée depuis l'appareil électrique (1).
